**Europäisches Patentamt**

**European Patent Office**

**Office européen des brevets**

(19)

(11) Veröffentlichungsnummer: **0 140 100**
**B1**

(12) **EUROPÄISCHE PATENTSCHRIFT**

(45) Veröffentlichungstag der Patentschrift: **09.05.90**

(51) Int. Cl.⁵: **B 60 J 7/12**

(21) Anmeldenummer: **84110917.6**

(22) Anmeldetag: **13.09.84**

(54) **Faltbare Plane.**

(30) Priorität: **21.09.83 DE 3334083**

(43) Veröffentlichungstag der Anmeldung:
**08.05.85 Patentblatt 85/19**

(45) Bekanntmachung des Hinweises auf die
Patenterteilung:
**09.05.90 Patentblatt 90/19**

(84) Benannte Vertragsstaaten:
**AT BE CH DE FR GB IT LI LU NL SE**

(56) Entgegenhaltungen:
**DE-A-1 455 743**
**DE-A-2 841 791**
**US-A-3 400 973**

(73) Patentinhaber: **HOECHST**
**AKTIENGESELLSCHAFT**
**Postfach 80 03 20**
**D-6230 Frankfurt am Main 80 (DE)**

(72) Erfinder: **Heinz, Otto**
**Bahnhofstrasse 66**
**D-6078 Neu-Isenburg (DE)**
Erfinder: **Golly, Helmut, Dr.**
**Am Schieferberg 17**
**D-6233 Kelkheim (Taunus) (DE)**
Erfinder: **Thiele, Wilhelm**
**Gundelhardtstrasse 2**
**D-6233 Kelkheim (Taunus) (DE)**
Erfinder: **Lechle, Wolfgang**
**Kauber Weg 3**
**D-6000 Frankfurt am Main 71 (DE)**

EP 0 140 100 B1

## Beschreibung

Die Erfindung betrifft eine faltbare Plane, bestehend aus Dachfläche, Seitenflächen und Stirnflächen.

Planen, z.B. Lastwagenplanen, sollen das transportierte Gut vor Witterungseinflüssen schützen. Beim Laden größerer Teile, z. B. mit dem Kran, müssen diese Planen entfernt werden. Dies ist vor allem bei großen Lastwagen sehr mühsam und langwierig und meist vom Fahrer alleine nicht zu machen.

Eine geeignete Vorrichtung, um die Plane leichter handhaben zu können, ist z.B. ein im Handel befindliches Schiebegestell. Dabei handelt es sich um ein Scherengitter, das unter der Dachplane auf Rollen läuft und durch Zusammenschieben die Plane faltet. Von Nachteil ist dabei, daß Beschädigungen der Plane, die beim Zusammenschieben zwischen die Scherengitterstäbe kommen kann, nicht ausgeschlossen sind.

Es wurde gefunden, daß auch ohne aufwendige Vorrichtung ein schnelles und einfaches Falten und Entfernen der Plane, die aus Dachfläche, zwei Seiten- und ein oder zwei Stirnflächen besteht, möglich ist, wenn die faltbare Plane des Anspruchs 1 eingesetzt wird.

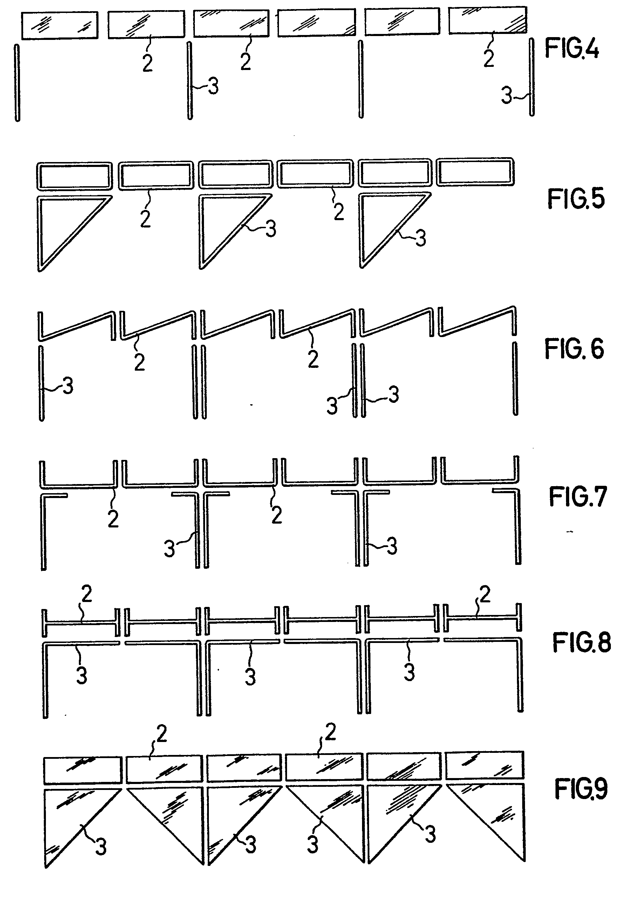

Erfindungsgemäß werden an die Dachplane im Bereich der Knicklinie (7) zwischen Dach- und Seitenplane rechteckige steife Flächenelemente (2) angebracht. Diese steifen Flächenelemente (2) können aber auch aus Streifen oder Stäben U-förmig, H-förmig oder rahmenförmig sein und mit der Plane eine rechteckige steife Fläche bilden (s. Fig. 4-9).

Zwischen den einzelnen Flächenelementen beeiben jeweils biegsame Zonen.

An die Seitenplanen werden ebenfalls im Bereich der Knicklinie (7) zwischen Dach- und Seitenplane quer zu dieser Knicklinie (7) Versteifungen (3) angebracht, und zwar an jede zweite biegsame Zone in der Dachplane anschließend. Die Quererstreckung dieser Versteifungen (3) ist gleich der Längserstreckung der rechteckigen steifen Flächenelemente (2) an der Dachplane. Diese Versteifungen (3) können streifen-(stab)förmig, L-förmig oder dreieckig als Fläche oder Rahmen ausgebildet sein (siehe Fig. 4- 9). Bei dreieckiger Ausbildung liegt jeweils ein Schenkel parallel zu einem Flächenelement (2) der Dachplane an der Knicklinie (7) zur Dachplane. Zwischen Versteifung (3) in der Seitenplane und Flächenelement (2) in der Dachplane verbleibt im Bereich der Knicklinie (7) wiederum eine biegsame Stelle. Sowohl die Flächenelemente (2) an der Dachplane wie auch die Versteifungen (3) an der Seitenplane werden entweder in Gewebe-Taschen, die an die Plane genäht, geschweißt oder geklebt sind, eingebracht und/oder sie werden direkt an die Plane genäht, geschweißt oder geklebt.

Die Flächenelemente (2) und die Versteifungen (3) werden vorteilhafterweise immer an der Unter- bzw. Innenseite der Plane angebracht.

Zwischen den rechteckigen steifen Flächenelementen (2) jeweils im Bereich jeden zweiten biegsamen Zone, an die auch jeweils die Verteifungen (3) der Seitenplane anschließen, sind an der Unterseite (Innenseite) der Plane Verdickungen (5) mit Ösen (4) angebracht, durch die auf beiden Seiten der Dachplane je ein Seil (Zugvorrichtung) (6) läuft. Diese Seile (6) (pro Plane 2 Stück) sind jeweils an einem Planenende bzw. an der Knicklinie zu einer Stirnfläche mit der plane fest verbunden.

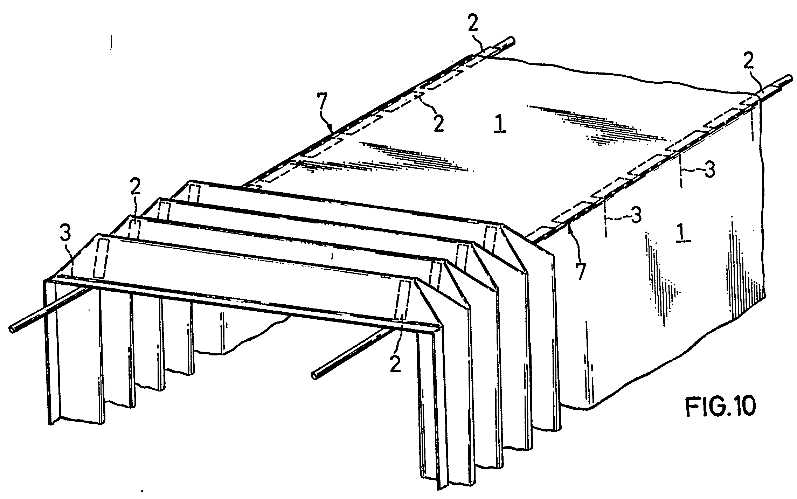

Im Bereich jeder biegsamen Zone, die nicht an die Versteifungen (3) an der Seitenplane anschließt, wird unterhalb der Plane eine Verdickung (5) angebracht, die, sobald an den Seilen (6) gezogen wird, die Faltung in der richtigen Richtung vorgibt und somit den Faltvorgang der Plane (1) erleichtert. Wird an den Seilen (6) weitergezogen, so richten sich die rechteckigen steifen Flächenelemente (2) durch gegenseitiges Abstützen je zwei und zwei dachförmig auf und die Versteifung (3) in den Seitenplanen, die zunächst mit den Seitenplanen senkrecht hängen, stellen sich seitlich waagerecht ab. Die Plane faltet sich dabei korrekt in der Art eines Faltenbalges zu einem Paket. (Fig. 10).

Das Entfalten bzw. Wiederauflegen der Plane geschieht durch Ziehen an den an der Plane befestigten Enden der Seile (6). Vorteilhafterweise ist das erste und das letzte rechteckige steife Flächenelement (2) auf jeder Seite der 'Dachplane um etwa 10 - 20% länger als die übrigen, so daß das gesamte Planenpaket in gefaltetem Zustand von diesem ersten und letzten Flächenelement abgestützt wird und nicht umkippen kann. Die Plane (1) kann in gefaltetem Zustand auf einfache Weise als Paket von dem Aufbaugestänge abgenommen und wieder aufgelegt werden.

Die folgenden Figuren erläutern die Erfindung. Es stellen dar:

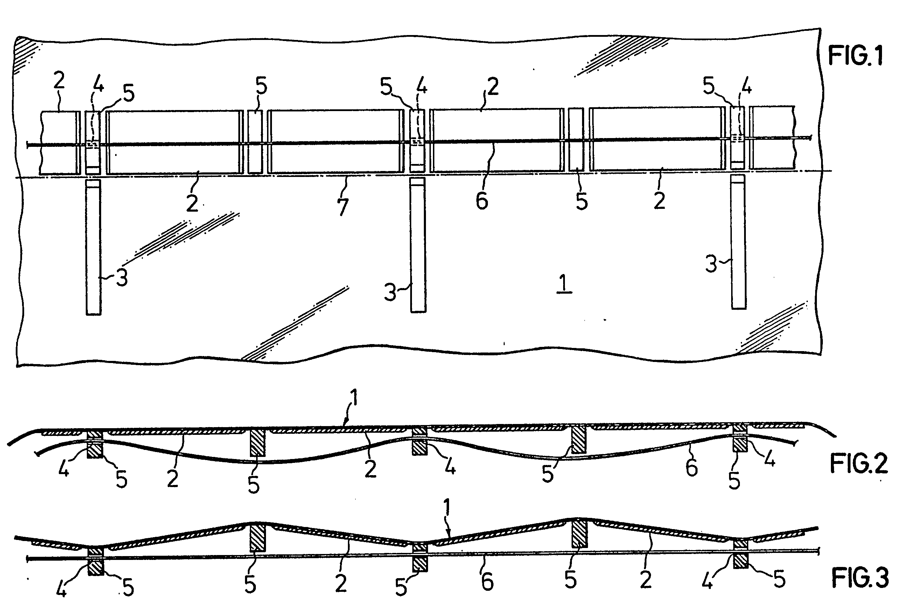

Fig. 1 Planenausschnitt von unten (innen) gesehen in flachliegendem Zustand.

Fig. 2 Schnitt durch die Plane (1) im Bereich der Zugvorrichtung (6) mit Seilführung unterhalb der rechteckigen steifen Flächenelemente (2) mit schlaffem Seil (6).

Fig. 3 wie Fig. 2, jedoch gespanntes Seil (6) zu Beginn der Faltung.

Fig. 4 Beispielsweise Ausführung der rechteckigen steifen Flächenelemente (2) als Rahmen und der Versteifungen (3) als Stäbe.

Fig. 5 Beispielsweise Ausführung der rechteckigen steifen Flächenelemente (2) als Rahmen und der Versteifungen (3) als Dreieckrahmen.

Fig. 6 Beispielsweise Ausführung der rechteckigen steifen Flächenelemente (2) als Z-förmiger Stab und der Versteifungen (3) als Doppelstab.

Fig. 7 Beispielsweise Ausführung der rechteckigen steifen Flächenelemente (2) als U-förmiger Stab und der Versteifungen (3) als L-förmiger Stab.

Fig. 8 Beispielsweise Ausführung der rechteckigen steifen Flächenelemente (2) als H-förmiger Stab und der Versteifungen (3) als L-förmiger Stab.

Fig. 9 Beispielsweise Ausführung der rechteckigen steifen Flächenelemente (2) als rechteckige Platte und der Versteifungen (3) als dreieckige Platte.

Fig. 10 Plane aufgelegt und teilweise gefaltet.

In den Figuren bedeutet: 1 Plane 2 rechteckige steife Flächenelemente, 3 Versteifungen, 4 Ösen, 5 Verdickungen, 6 Zugvorrichtung (Seil), 7 Knicklinie zwischen Dach- und Seitenplane.

In den Figuren 4-10 sind der besseren Übersicht halber die Verdickungen 5 nicht eingezeichnet.

**Patentansprüche**

1. Faltbare Plane (1), bestehend aus Dachfläche, Seitenflächen und einer oder zwei Stirnfläche(n), dadurch gekennzeichnet, daß sich in der Dachfläche jeweils an der Knicklinie (7) zur Seitenfläche über die gesamte Dachflächenlänge rechteckige steife Flächenelemente (2) mit dazwischenliegenden biegsamen Zonen befinden, und daß sich in der jeweiligen Seitenfläche, an der Knicklinie zur Dachfläche Versteifungen (3) quer zu dieser Knicklinie an jeder zweiten biegsamen Zone befinden, wobei die Versteifungen eine Quererstreckung gleich der Längserstreckung der rechteckigen steifen Flächenelemente parallel zur Knicklinie haben, und daß an einem Ende der Dachfläche auf jeder Seite an der dort befindlichen biegsamen Zone je eine Zugvorrichtung (6) befestigt ist, die durch Ösen (4) an der Unterseite jeder zweiten biegsamen Zone läuft, an die auch jeweils die Versteifungen (3) anschließen, wobei die Plane mit Hilfe der Zugvorrichtung (6) derart zusammenfaltbar ist, daß sich die rechteckigen steifen Flächenelemente (2) durch gegenseitiges Abstützen je zwei und zwei dachförmig aufrichten und sich die Versteifungen (3), die zunächst in Dachstrecklage mit den Seitenflächen senkrecht hängen, seitlich waagerecht abstellen.

2. Faltbare Plane nach Anspruch 1, dadurch gekennzeichnet, daß die rechteckigen steifen Flächenelemente und/oder die Versteifungen durch Gewebe-Taschen an der Plane gehalten werden.

3. Faltbare Plane nach Anspruch 1, dadurch gekennzeichnet, daß die rechteckigen steifen Flächenelemente und/oder die Versteifungen durch Schweißen an der Plane befestigt sind.

**Revendications**

1. Bâche pliante (1), constituée d'une surface de toît, de surfaces latérales et d'une ou deux surface(s) d'extrémité, caractérisée en ce que des éléments de surface rectangulaires rigides (2) sont disposés dans la surface de toît, dans la région de chacune des lignes de pliage (7) formées avec les surfaces latérales et sur toute la longueur de la surface de toît, les éléments de surface (2) étant séparés par des zones flexibles, que des raidisseurs (3) sont disposés dans chaque surface latérale, dans la région de la ligne de pliage formée avec la surface de toît, raidisseurs qui sont orientés transversalement à cette ligne de pliage et sont chacun situés en regard de chaque deuxième zone flexible, l'étendue transversale des raidisseurs étant égale à l'étendue longitudinale des éléments de surface rectangulaires rigides, parallèlement à la ligne de pliage, qu'un dispositif de traction (6) est fixé à une extrémité de la surface de toît, sur chaque côté de cette surface, au droit de la zone flexible se trouvant à et endroit, dispositif de traction qui passe par des oeillets 94) sur le côté inférieur de chaque deuxième zone flexible, à laquelle se raccorde également un raidisseur (3), la bâche pouvant être pliée, à l'aide des dispositifs de traction (6), de manière que les éléments de surface rectangulaires rigides (2), en s'appuyant mutuellement deux par deux, se relèvent à la façon des versants d'un toît et que les raidisseurs (3), suspendus au départ verticalement avec les surfaces latérales, lorsque la surface du toît est étendue, se mettent horizontalement en saillie.

2. Bâche pliante selon la revendication 1, caractérisée en ce que les éléments de surface rectangulaires rigides et/ou les raidisseurs sont maintenus en place sur la bâche par des poches en tissu.

3. Bâche pliante selon la revendication 1, caractérisée en ce que éléments de surface rectangulaires rigides et/ou les raidisseurs sont fixés à la bâche par soudage.

**Claims**

1. A foldable tarpaulin (1), consisting of a roof surface, side surfaces and one or two end surface(s), in which rectangular rigid surface elements (2) with intermediate bendable zones are in each case located in the roof surface on the bending line (7) with the side surface over the entire length of the roof surface, and in which reinforcements (3) are situated in the respective side surface on the bending line with the roof surface, transverse to this bending line at every second bendable zone, the reinforcements having a transverse extension identical to the longitudinal extension of the rectangular rigid surface elements parallel to the bending line, and in which on each side of one end of the roof surface in each case a drawing device (6) is fastened to the bendable zone situated there, which drawing device runs through eyes (4) on the underside of every second bendable zone to which also the reinforcements (3) are in each case adjacent, it being possible for the tarpaulin to be folded together with the aid of the drawing device (6) in such a way that the rectangular rigid surface elements (2) each stand up in pairs in the shape of a roof as a result of mutual support and the reinforcements (3), which initially hang perpendicular to the side surfaces in the position with the roof extended, are positioned laterally horizontally.

2. The foldable tarpaulin as claimed in claim 1, in which the rectangular rigid surface elements and/or the reinforcements are held against the tarpaulin by cloth pockets.

3. The foldable tarpaulin as claimed in claim 1, in which the rectangular rigid surface elements and/or the reinforcements are fastened to the tarpaulin by welding.

FIG.1

FIG.2

FIG.3

FIG.4

FIG.5

FIG. 6

FIG.7

FIG.8

FIG.9

FIG.10

EP 0 140 100 B1